(19) **Europäisches Patentamt European Patent Office Office européen des brevets**

(11) **EP 3 562 873 B1**

(12) **EUROPEAN PATENT SPECIFICATION**

(45) Date of publication and mention
of the grant of the patent:
**06.09.2023 Bulletin 2023/36**

(21) Application number: **17821947.3**

(22) Date of filing: **28.12.2017**

(51) International Patent Classification (IPC):
*C08J 9/36* (2006.01)          *C08L 23/10* (2006.01)
*C08J 9/14* (2006.01)          *C08J 9/16* (2006.01)
*C08J 9/22* (2006.01)

(52) Cooperative Patent Classification (CPC):
**C08J 9/141; C08J 9/16; C08J 9/22; C08J 9/36;**
C08J 2201/03; C08J 2201/034; C08J 2203/14;
C08J 2205/00; C08J 2207/00; C08J 2300/12;
C08J 2323/10

(86) International application number:
**PCT/EP2017/084693**

(87) International publication number:
**WO 2018/122293 (05.07.2018 Gazette 2018/27)**

(54) **LOW EMISSION POLYPROPYLENE FOAM SHEETS**

EMISSIONSARME POLYPROPYLEN-SCHAUMSTOFFPLATTEN

FEUILLES DE MOUSSE DE POLYPROPYLÈNE À FAIBLE ÉMISSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.12.2016 EP 16207541**

(43) Date of publication of application:
**06.11.2019 Bulletin 2019/45**

(73) Proprietor: **Borealis AG**
**1020 Vienna (AT)**

(72) Inventors:
• **BRAUN, Hermann**
**4040 Linz (AT)**
• **REICHELT, Norbert**
**4501 Neuhofen/Krems (AT)**
• **FUCHS, Andreas**
**4060 Leonding (AT)**
• **STANDLER, Alexander**
**4231 Wartberg/Aist (AT)**
• **GAHLEITNER, Gahleitner,**
**4501 Neuhofen/Krems (AT)**

(74) Representative: **Maiwald GmbH**
**Elisenhof**
**Elisenstraße 3**
**80335 München (DE)**

(56) References cited:
**EP-A1- 0 588 321**

• **DATABASE WPI Week 201434 Thomson
Scientific, London, GB; AN 2014-E33968
XP002770236, -& CN 103 497 280 A (ZHEJIANG
XINHENGTAI NEW MATERIAL CO LTD) 8 January
2014 (2014-01-08)**

## Description

The invention relates to a process for production of a foam having low organic compounds emissions.

## BACKGROUND OF THE INVENTION

Foamed articles are widely used in car industry and as food packaging materials in particular because of the light weight, low cost and ease of shaping. The problem with foamed articles is that as a result of the foaming process the organic compound emissions will be higher for a foam than for the original polymer. The undesired emissions during use are exacerbated at elevated temperatures that can exist in car interiors.

Low organic compounds emissions implies low volatile organic compounds (VOC) and/or low FOG emissions as defined in standard VDA 278:2011. VDA regulations address the organic emissions from automotive components. The VDA test is based on Thermal Desorption Analysis of Organic Emissions for the Characterization of Non-Metallic Materials for Automobiles (10/2011) of the polypropylene polymer, wherein two classes of compounds are distinguished: highly and medium volatile substances (VOC) up to C25 and those of low volatility (FOG) in the range of C14 up to C32.

Little data exist on pollution levels within interior cabins of automobiles. Yet significant concerns and questions have been raised concerning the potential health hazards of the "new car smell" regarding carcinogenic and allergenic activity and respiratory problems.

Therefore foamed articles produced for the automotive interior industry are stocked for a long period of time, such that the VOCs have been emitted at least to some extent before being built into the vehicle's interior. This is a big disadvantage in the automotive industry in terms of timing, space and cost. Further this cannot significantly reduce the FOG because the ambient temperature vapour pressure of the FOG is too low, to date low-emitting, non-toxic interiors are not available.

Many attempts have been aimed at providing foams with reduced organic emissions. For example, US 4 424 287 A relates to thermoplastic foams of polystyrene which are prepared with a blowing agent which is a mixture of an organic plasticizing blowing agent, such as pentane, and an atmospheric gas, such as carbon dioxide. Such foams will have reduced emissions upon ageing as compared to those foamed with pure hydrocarbon blowing agent.

US 6 245 823 B1 relates to expanded polyethylene material by forming a foamable melt of polyethylene, a nucleating agent, a material which retards migration of alkanes, and a blowing agent which comprises 10 to 100 mole percent ethane. Low VOC emissions are claimed as one advantage.

US 7 166 248 B2 covers a process for producing an alkenyl aromatic polymer foam structure that comprises melting at least one alkenyl aromatic polymer resin. An effective amount of blowing agent mixture comprising at least one VOC blowing agent and acetone is dissolved in the at least one alkenyl aromatic polymer. The resulting foam structure is characterized by low emissions.

US 6 521 675 B1 describes a foamable polypropylene composition comprising a polypropylene resin having an D1238L melt flow rate of from about 0.5 to about 30 g/10 min, and a process for extruding rigid, foamed polypropylene sheet with improved surface appearance having a density in the range 0.4 to about 0.8 $g/cm^3$. A chemical blowing agent is used and low emissions in general are claimed.

CN 103 497 280 A discloses a cross-linked polypropylene microcellular foam material, comprising, in parts by weight: 99 to 100 parts of polypropylene resin, 0.1 to 2 parts of irradiation sensitizer and 0.1 to 3 parts of antioxidant, and produced through the following steps: mixing the raw materials; dipping a substrate with CO2 gas; foaming the substrate; performing irradiation treatment on the foam material; performing high-temperature annealing at 100 to 120 °C.

Foamed polypropylene has taken on an important role in the automotive industry for its versatility and recyclability, and is used for exterior automotive applications, such as bumpers and side sills, as well as interior automotive applications, such as dashboards and interior trim. However, the problem of existing polypropylene foams remains to reduce the volatile organic compounds. It is considered that during the extrusion foaming the VOC and FOG emissions are increased relative to the values of the starting polypropylene material because of the addition of blowing agent, which will partially dissolve in the polymer and be released slowly after foam formation, the increase of the specific surface facilitating the release of previously migration-limited components and to degradation phenomena in processing results in more oligomers.

## SUMMARY OF THE INVENTION

Accordingly, there is still a desire for a process for the manufacture of a foam with low VOC and FOG emissions.

According to the invention there has been provided a process for production of a foam having low organic compounds emissions according to claim 1. The process comprises the steps of:

a. providing a foam comprising a propylene composition comprising a high melt strength propylene (HMS-PP) homopolymer or copolymer or combinations thereof, said HMS-PP having a melt strength of at least 25 cN at a maximum speed of at least 200 mm/s, as measured in a Rheotens apparatus using a capillary die with a diameter of 2 mm and a length of 6 mm and a temperature of 200 °C with an acceleration of the melt strand drawn down of 120 $mm/sec^2$, and said foam having a melting temperature Tm of at least 135°C, preferably at least 140°C,

b. subjecting the foam to a thermal treatment at a temperature Tt between 5 and 15 °C lower than the melting temperature of the HMS-PP and for a duration between 1 min and 10 minutes.

The inventors have found that the process according to the invention it is possible to obtain a foam having very low organic compounds emissions. The specified polypropylene foam allows for a heat treatment at high temperatures where the organic volatiles have sufficient vapor pressure to vaporize in short time during the heat treatment and where the product nevertheless is dimensionally stable. In this process not only the VOC but also the FOG is reduced.

## BRIEF DESCRIPTION OF DRAWINGS

Fig.1 shows the effect of heat treatment temperature at 3min treatment time
Fig.2 shows the effect of heat treatment time at 140 °C treatment temperature.

The figures are meant for illustrative purposes only, and do not serve as restriction of the scope or the protection as laid down by the claims.

## DETAILED DESCRIPTION OF THE INVENTION

The thermal treatment is done at a treatment temperature Tt between 5 and 15 °C lower than the melting temperature of the HMS-PP and for a duration between 1 and 10 minutes, preferably between 2 and 8 or 3 to 5 minutes. Preferably, the melting temperature Tm of the HMS-PP foam is at least 150 °C and the thermal treatment temperature Tt is between 120 and 145 °C. At the higher Tm the dimension stability is guaranteed at higher temperatures and volatiles can be reduced in shorter time at higher temperature.

The melting temperature Tm is measured according to ISO-11357-3 by DSC analysis using a TA Instrument Q2000 differential scanning calorimetry device (DSC) on 5 to 10 mg samples. Crystallisation (Tc) and melting temperatures (Tm) were obtained in a heat/cool/heat cycle with a scan rate of 10 °C/min between 30 °C and 225 °C. Melting (Tm) and crystallisation (Tc) temperatures were taken as the peaks of the endotherms and exotherms in the cooling cycle and the second heating cycle respectively. In case the polypropylene composition comprises more than one polypropylene components, the melting temperature Tm refers to the melting temperature of the part of the composition that has the highest melting point; in particular in case of a heterophasic polypropylene composition the Tm refers to the (higher) Tm of the at least 50 wt% of polypropylene(s) forming the matrix.

The HMS-PP needs a high melt strength in view of the foaming process, and specifically has a melt strength of at least 25 cN at a maximum speed of at least 200 mm/s, preferably a melt strength of at least 25 cN at a maximum speed of at least 250 mm/s (measured in a Rheotens apparatus using a capillary die with a diameter of 2 mm and a length of 6 mm and a temperature of 200 °C with an acceleration of the melt strand drawn down of 120 mm/sec$^2$) as defined in EP 2 000 504 A1.

Additionally, the high melt strength of the HMS-PP polymer can be characterised in having a strain hardening factor (SHF), as described in US 8 722 805 B2, of at least 1.7, more preferably of at least 2, even more preferably in the range of 2 to 15, still more preferably in the range of 3.5 to 15, still even more preferably in the range of 3.5 to 6.5 measured at a strain rate of 3.0 s$^{-1}$ and a Hencky strain of 2.5.

The HMS-PP preferably has a melt flow rate MFR of between 0.5 and 7 dg/min and most preferably between 0.5 and 4 dg/min according to ASTM 01238 Condition L. Preferably the HMS-PP has a z-average molecular weight of at least 2000000 g/mol as measured by known procedures, preferably by GPC/VIS/LS.

The propylene composition used in the process comprises a high melt strength propylene (HMS-PP) homopolymer or copolymer or combinations thereof. Combinations can be physical blends, mixtures or reactor blends. For the purpose of the present invention, the expression "propylene homopolymer" refers to a polypropylene that consists substantially, i.e. of at least 97 mol-%, preferably of at least 98 mol-%, more preferably of at least 99 mol- %, most preferably of at least 99.8 mol-% of propylene units. In a preferred embodiment only propylene units in the propylene homopolymer are detectable.

A propylene copolymer preferably comprises propylene monomers and 1.0 to 10.0 wt% of at least one comonomer selected from ethylene and a C4-C12 alpha olefin. A preferred PP copolymer is a crystalline propylene random copolymer comprising propylene monomers and having a melting temperature in the range of 135 to 155 °C as measured according to ISO-11357-3 and a melt flow rate (MFR2) in the range of 0.1 to 15 g/10 min as measured according to ISO 1133 at a temperature of 230 °C and under a load of 2.16 kg.

The high melt strength polypropylene HMS-PP can be I) a long-chain branched polypropylene synthesised with a metallocene catalyst or II) produced by modifying polypropylene homopolymer or polypropylene copolymer having less than 6 wt% of comonomer wherein the modification is done a) by e-beam irradiation or b) by reacting with peroxides in the presence of a polyunsaturated compound followed by thermal treatment to reduce volatiles to a VOC below 75 μgTE/g and a FOG below 150 μgHD/g.

Suitable HMS branched polypropylene can be obtained by the use of a specific metallocene catalyst as described in EP 1 892 264 A1.

EP 0 879 830 A1 describes a suitable high melt strength (HMS) polypropylene produced in a post-reactor process (process II.b above) wherein polypropylene homopolymer or polypropylene copolymer are modified with peroxide and butadiene. This patent covers a wide range of powder melt flow rates (MFR's) and particle sizes. In such process a thermal post treatment is preferably done to reduce emissions from degradation product and possible unreacted reactants from the HMS-PP polymer itself.

Another suitable HMS-PP is described in US 6 521 675 B1 and which relates to a foamable polypropylene composition comprising a polypropylene resin having a melt flow rate of from about 0.5 to about 30 g/10 min and a method for extruding rigid, foamed polypropylene sheet with improved surface appearance having a density in the range 0.4 to about 0.8 g/cm$^3$. The polypropylene resin has monomodal molecular weight distribution and an absence of significant branching

Suitable commercially available HMS-PP grades are for example Daploy WB140HMS, WB135HMS or WB130HMS from Borealis AG, Austria.

In a preferred embodiment the propylene polymer composition used in the process comprises at least 50 wt% (relative to the total weight of the propylene polymer composition) of a) the HMS-PP and up to 50 wt% of b) one or more polypropylene copolymers like random copolymers or heterophasic copolymers with ethylene and optionally other C4 to C10 alpha-olefins or polyethylene. This propylene polymer composition may be a heterophasic copolymer composition wherein the HMS-PP polymer a) forms the matrix phase together with the random copolymer b) or the matrix part of the heterophasic copolymer b), while the disperse rubber phase of the heterophasic copolymer b) and/or polyethylene forms the disperse phase. The melting temperature Tm of such a propylene polymer composition is the Tm of the component(s) forming the matrix phase, and in case there are more than one melting temperatures it implies the lowest melting temperature of the matrix phase.

EP 1 354 901 A1 describes a suitable heterophasic propylene polymer composition comprising a matrix phase comprising a propylene homopolymer and/or a propylene copolymer with up to 20 wt% of ethylene, which can be a HMS-PP, and a disperse phase comprising an ethylene rubber copolymer with propene and from 20 to 70 wt% of ethylene, the ethylene rubber copolymer being distributed within the polymer composition in the form of particles.

In a preferred embodiment, the polypropylene composition to be used in the process comprises HMS-PP in mixture with a heterophasic polypropylene copolymer (HECO), for example BC250MO from Borealis, preferably in relative amounts between 30 to 70, preferably 40 to 60 wt% HMS-PP (wt% on total of HMS-PP and HECO). Typical heterophasic polypropylene copolymers (HECOs) comprise a polypropylene homopolymer as matrix phase and are characterized by a melting temperature Tm in the range of 150 to 170 °C. Such copolymers are for example described in WO 2016/066446 A1 and EP 3 015 504 A1.

Such heterophasic propylene copolymers (HECOs) comprise a matrix being either a propylene homopolymer or a random propylene copolymer in which an amorphous phase, which contains a propylene copolymer rubber (elastomer), is dispersed. Thus the polypropylene matrix contains (finely) dispersed inclusions not being part of the matrix and said inclusions contain the elastomer. The term inclusion indicates that the matrix and the inclusion form different phases within the heterophasic propylene copolymer (HECO), said inclusions are for instance visible by high resolution microscopy, like electron microscopy or scanning force microscopy or atomic force microscopy, or by dynamic mechanical thermal analysis (DMTA). Further the heterophasic polypropylene may contain to some extent a crystalline polyethylene, which is a by-reaction product obtained by the preparation of the heterophasic propylene copolymer. Such crystalline polyethylene is present as inclusion of the amorphous phase due to thermodynamic reasons.

The polypropylene composition to be used in the process may comprise a minor amount of non-propylenic polymers, which may include high-, medium-, low-, and linear density polyethylenes, polybutene-1, ethylene/acrylic acid copolymer, ethylene/vinyl acetate copolymer, ethylene/propylene copolymer, styrene/butadiene copolymer, ethylene/styrene copolymer, ethylene/ethyl acrylate copolymer, and ionomer. The foamable propylene polymer composition may, if desired, contain other useful thermoplastics such as high density polyethylene, chlorinated polyethylene, thermoplastic olefin mixtures of EPDM rubbers (ethylene/propylene/diamine copolymers) and polyethylene. The foamable propylene polymer composition preferably comprises less than 20 wt%, more preferably less than 10 and most preferably less than 5 wt% non-propylenic polymer based upon the total weight of the propylene polymer composition.

The foam may be produced by vacuum foaming, by physical agitation of the foamable propylene composition mixture or by incorporating a blowing agent into the foamable propylene polymer composition. In a preferred embodiment a blowing agent is incorporated into the foamable propylene polymer composition.

The foam product generally can be in the form of beads, typically having a foam density of 20 g/liter or higher or, more preferably in the form of extruded foam, typically having a foam density of 350 g/liter or lower. The foam can also be articles manufactured from the foam beads or extrudates.

The process can be a heat treatment on an existing foam product, but in a preferred embodiment of the process of the invention the foam is formed by extruding a composition comprising HMS-PP, a blowing agent and preferably a foam nucleating agent, then cooling the foamed extrudate to a temperature between 10 and 30 °C below the melt temperature Tm and subsequently bring the foamed extrudate to the thermal treatment temperature Tt and do the thermal treatment.

The blowing agent used in the foaming of the polypropylene composition invention is not limited to any class or type. It can be chemical blowing agents, or physical blowing agents of either hydrocarbon and/or inorganic types, combination of either types and/or both types or carbon dioxide. Preferably, however a physical blowing agent is used, preferably an aliphatic organic solvent having 3 to 10, preferably 3 to 8 carbon atoms, more preferably the polypropylene composition is extruded in the presence of an aliphatic organic solvent selected from n-butane, n-pentane, n- hexane, branched isomers or mixtures thereof.

The blowing agent is generally incorporated into the molten foamable propylene polymer composition to prepare the foamed layer. The amount of blowing agent incorporated into the molten foamable propylene composition is generally from 0.01 to 5, and preferably from 0.1 to 3 weight percent based on the total weight of blowing agent and foamable propylene polymer composition.

The blowing agent is partly dissolved in the polypropylene and as the blowing agent evaporates the effective melting temperature of the PP polymer increases and at the same time the extrudate is cooled by evaporation of the blowing taking. This leads to a quick fixing of the structure of the foam and shape of the product, which quickly provides dimension stability but also leads to volatile components entrapment. The heat treatment allows evaporation of the volatile blowing agent but also the evaporation of the blowing agent drives out the less volatile organic components resulting in a low VOC and low FOG.

The heat treatment process is carried out for a time and at a temperature such that the polypropylene foam product obtained has a volatile organic compounds (VOC) emission, determined according to VDA278:2011 at 90 °C for 0.5 hrs below 300 $\mu$gTE/g, preferably below 200, 150 or 100 and most preferably below 50 $\mu$gTE/g. Preferably, the polypropylene foam product obtained has a FOG emission, determined according to VDA278:2011 at 120 °C for 1.0 hrs, of below 200 $\mu$gHD/g, preferably below 150 and most preferably below 100 $\mu$gHD/g.

It has been found that the polypropylene foam product obtained can have a VOC and FOG emission level equal or less than 150 %, 120 % or more preferably less than 100 % of the calculated weight average VOC and FOG emission level of the polypropylene constituents before foaming.

In the process the polypropylene composition preferably further comprises antioxidants and the heat treatment (temperature and time) is such that the amount of antioxidant reduces by less than 20 wt%, preferably less than 15 wt%, more preferably less than 10 wt%. This implies that in the process of the invention with the specific polypropylene there is no significant oxidative degradation during the heat treatment.

The foamable propylene polymer composition may optionally comprise a nucleating agent in order to control the size of foam cells. Useful nucleating agents are taught in US 6 417 242 B1, column 11, line 63 to column 12, line 3. Preferred nucleating agents include inorganic substances such as calcium carbonate, talc, clay, titanium dioxide, silica, barium stearate, and diatomaceous earth. The amount of nucleating agent employed may range from 0.1 to 3 parts by weight per hundred parts by weight of a polymer resin. The preferred range is from 0.3 to 2 parts by weight.

Further additives are optionally included in the foamable propylene polymer composition, such as stabilizers including free radical inhibitors and ultraviolet wave (UV) stabilizers, neutralizers, slip agents, antiblock agents, pigments, antistatic agents, clarifiers, waxes, resins, fillers such as nano-fillers, silica and carbon black, foam stabilizers and other additives within the skill in the art which are used in combination or alone. Effective amounts are known in the art and depend on parameters of the polymers in the composition and conditions to which they are exposed.

The PP composition comprising the HMS-PP and comprising blowing agents and optionally nucleating agents and other additives and optionally other polymers as described above is extruded from the melt from a cylindrical die. The foaming starts on exit of the melt from the die. The cylindrical foam sheet cools is slit open to form sheets. Orientation or stretching may take place after extrusion.

Further disclosed is a polypropylene foam product obtainable by the process according to the invention, preferably in the form of foamed sheet, beads, pipes, preferably sheets or articles made from foamed sheets or beads. The polypropylene foam product has low VOC and preferably also a low FOG properties as described above.

Further disclosed is a process for the manufacture of articles comprising a foam and having a low VOC and low FOG for use in closed rooms or compartments, in particular in cars or in food packaging, said process comprising the use of a polypropylene foam produced according to the process of the invention.

## EXAMPLES

The examples are intended to be illustrative, not limiting. It will be apparent to the person skilled in the art that alternative and equivalent embodiments of the invention can be conceived and reduced to practice, without departing from the scope of the invention.

Example 1:

A polypropylene composition comprising 50 wt% WB140HMS (from Borealis), 49 wt% BC250MO (from Borealis), 1 wt% talc as foam nucleator was extruded using 4 wt% isobutene as the blowing agent to make a foam sheet having a density of 150 g/liter. BC250MO is a high impact polypropylene heterophasic copolymer. The 3 mm foam layer was directly cooled to room temperature. The melting temperature Tm of the foam sheet was 150 °C (measured by DSC, 10 °C per minute, measured 1 hour after sheet production).

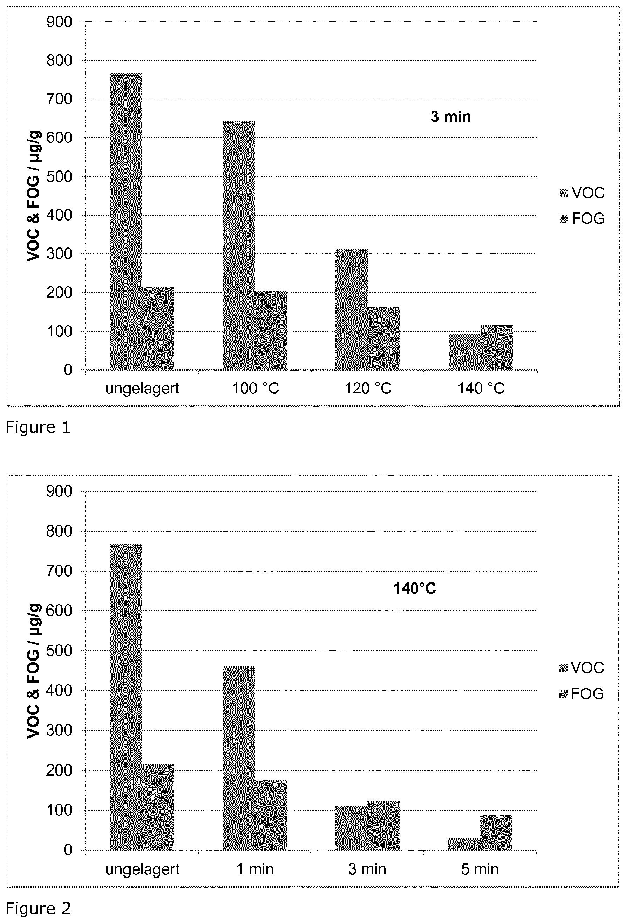

The extrusion-foamed sheet was cut into pieces of 10x10cm and subjected to heat treatment for periods ranging between 1 minute and 4 days at temperatures of 100 °C, 120 °C and 140 °C. The VOC and FOG values of the samples have been measured as described below. The results are presented in Figures 1 and 2.

*VOC*

VOC emissions have been determined according to VDA 278:2011. VDA standards are issued by "Verband der Automobilindustrie". The VDA 278 standard specifies a strict workflow. Here, two calibration standards are measured. Toluene is used to determine the response factor for the VOC calibration and hexadecane respectively for determination of the response factor for the FOG calibration. After injection of the standard solution, the solvent is evaporated for five minutes under a continuous flow of nitrogen (100 mL/min). The sample to be investigated (upper layer of fairing parts) is removed from its packaging immediately prior to analysis and cut into small pieces (approx. 10 mg) which are then placed in the middle of a carefully cleaned desorption tube. Each sample is measured twice - first to determine its VOC value (desorption at 90 °C, for 30 minutes) and subsequently also to determine its FOG value (desorption at 120 °C, for 1 hour).

VOC according to VDA 278 is the sum of all high and medium volatile compounds. It is calculated as toluene equivalent (TE). VOC according to VDA 278 represents all organic compounds in the boiling point and elution range of up to C20 (n-eicosane). VOC = 130 $\mu$gTE/g and FOG = 384 $\mu$gHD/g (excluding blowing agent and degradation)

VOC and FOG emissions have been determined from a HMS-PP sheet of 10x10 cm.

*FOG*

FOG was determined according to VDA 278:2011. FOG according to VDA 278 is the sum of all organic compounds of low volatility, which have an elution time greater than or equal to n-hexadecane. FOG is calculated as hexadecane equivalent (HE). FOG according to VDA 278 represents organic compounds in the boiling point range of n-alkanes C16 to C32.

Also the VOC and FOG of the constituent polypropylene starting materials WB140HMS and BC250MO were measured. The values were WB140HMS: VOC = 67 $\mu$gTE/g and FOG = 102 $\mu$gHD/g BC250MO: VOC = 196 $\mu$gTE/g and FOG = 680 $\mu$gHD/g The weight average calculated values for the polypropylene composition before foaming (hence excluding blowing agent and degradation) would be: VOC = 130 $\mu$gTE/g and FOG = 384 $\mu$gHD/g.

The results show that a very quick reduction of VOC and FOG was possible in particular at the highest tested temperature of 140 °C. Further it has been shown that the VOC/FOG emissions of the foam are even lower than the calculated average value for the starting materials and even lower than the values of the HMS-PP component itself.

**Strain hardening behaviour (melt strength)**

The strain hardening behaviour is determined by the method as described in EP 2 000 504 A1 and also in the article "Rheotens-Mastercurves and Drawability of Polymer Melts", M. H. Wagner, Polymer Engineering and Sience, MID-APRIL ISW, Vol. 36, NO. 7, pages 925 to 935.

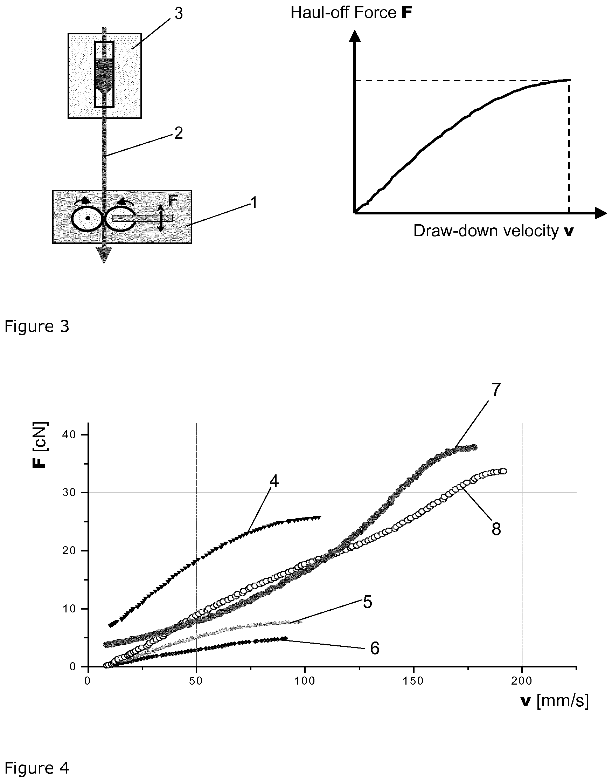

For detailed explanation of the measuring method it is also referred to the figures 3 and 4. Figure 3 shows a schematic representation of the experimental procedure which is used to determine strain hardening.

The strain hardening behaviour of polymers is analysed by Rheotens apparatus (1) (product of Göttfert, Siemensstr.2, 74711 Buchen, Germany) in which a melt strand (2) is elongated by drawing down with a defined acceleration. The haul-off force F in dependence of drawdown velocity v is recorded.

The test procedure is performed in a standard climatized room with controlled room temperature of 23 °C. The Rheotens apparatus (1) is combined with an extruder/melt pump (3) for continuous feeding of the melt strand (2). The extrusion temperature is 200 °C; a capillary die with a diameter of 2 mm and a length of 6 mm is used. At the beginning of the experiment, the take-up speed of the Rheotens wheels was adjusted to the velocity of the extruded polymer strand (tensile force zero): Then the experiment was started by slowly increasing the take-up speed of the Rheotens wheels until the polymer filament breaks. The acceleration of the wheels was small enough so that the tensile force was measured under quasi-steady conditions.The acceleration of the melt strand (2) drawn down is 120 mm/sec$^2$.

The Rheotens was operated in combination with the PC program EXTENS. This is a real-time data-acquisition program, which displays and stores the measured data of tensile force and drawdown speed.

The schematic diagram in figure 1 shows in an exemplary fashion the measured increase in haul-off force F (i.e. "melt strength") versus the increase in drawdown velocity v (i.e. "drawability").

Figure 4 shows the recorded curves of Rheotens measurements of polymer samples with and without strain hardening behaviour. The maximum points (Fmax; vmax) at failure of the strand are characteristic for the strength and the drawability of the melt.

The standard propylene polymers 4,5,6 with melt indices of 0.3, 2.0 and 3.0 g/10 min at 230 °C/2.16 kg show a very low melt strength and low drawability. They have no strain hardening.

Modified propylene polymer 7 (melt index of sample in diagram is 2 to 3 g/10 min at 230 °C/2.16 kg) or LDPE 8 (melt index of sample in diagram is 0.7 g/10 min at 230 °C/2.16 kg) show a completely different drawability versus melt strength behaviour. With increasing the draw down velocity v the haul-off force F increases to a much higher level, compared to the standard propylene polymers 4,5,6. This curve shape is characteristic for strain hardening.

### Strain Hardening Factor (SHF)

The strain hardening factor has been measured as described in US 8 722 805 B2. The strain hardening factor is defined as

$$SHF = \frac{\eta_E^+(t, \dot{\varepsilon})}{\eta_{LVE}^+(t)} = \frac{\eta_E^+(t, \dot{\varepsilon})}{3\eta^+(t)}$$

wherein

$\eta_E^+(t, \dot{\epsilon})$ is the uniaxial extensional viscosity; and

$\eta_{LVE}^+(t)$ is three times the time dependent shear viscosity ($n^+(t)$) in the linear range of deformation.

The determination of the linear viscoelastic envelop in extension $\eta_{LVE}^+(t)$ using IRIS Rheo Hub 2008, required the calculation of the discrete relaxation time spectrum from the storage and loss modulus data (G', G" ($\omega$)). The linear viscoelastic data (G', G" ($\omega$)) was obtained by frequency sweep measurements undertaken at 180 °C, on a Anton Paar MCR 300 coupled with 25 mm parallel plates. The underlying calculation principles used for the determination of the discrete relaxation spectrum are described in Baumgärtel M, Winter HH, "Determination of the discrete relaxation and retardation time spectra from dynamic mechanical data", Rheol Acta 28:511519 (1989).

IRIS PheoHub 2008 expresses the relaxation time spectrum as a sum of N Maxwell modes

$$\overset{o}{G}(t) = G_e \cdot \sum_1^N g_i \cdot e^{-\frac{t}{\lambda_i}}$$

wherein $g_i$ and $\lambda_i$ are material parameters and $G_e$ is the equilibrium modulus.

The choice for the maximum number of modes, N used for determination of the discrete relaxation spectrum, is done by using the option "optimum" from IRIS PheoHub 2008. The equilibrium modulus $G_e$ was set at zero. The nonlinear fitting used to obtain $\eta_{LIVE}^+(t)$ is performed on IRIS Rheo Hub 2008, using the Doi-Edwards model.

The uniaxial extensional viscosity $\eta_E^+(t, \dot{\epsilon})$ is obtained from uniaxial extensional flow measurements, conducted on an Anton Paar MCR 501 coupled with the Sentmanat extensional fixture (SER-1). The temperature for the uniaxial extensional flow measurements was set at 180 °C, applying extension (strain) rates $\partial\varepsilon/\partial t$ ranging from 0.3 s$^{-1}$ to 10 s$^{-1}$ and covering a range of Hencky strain

$$\varepsilon = \ln\left[(l - l_0) / l_0\right],$$

with $l_0$ being the original and $l$ the actual sample fixation length, from 0.3 to 3.0. Particularly care was taken for the preparation of the samples for extensional flow. The samples were prepared by compression moulding at 230 °C. followed by slow cooling to room temperature (forced water or air cooling were not used). This procedure allowed obtaining well shaped samples free of residual stresses. The sample was left for five minutes at the testing temperature to ensure thermal stability (set temperature ±0.1 °C), before carrying out the uniaxial extensional flow measurements.

## Claims

1. A process for production of a foam having low organic compounds emissions, the process comprising the steps of:

   a. providing a foam comprising a propylene composition comprising a high melt strength propylene (HMS-PP) homopolymer or copolymer or combinations thereof, said HMS-PP having a melt strength of at least 25 cN at a maximum speed of at least 200 mm/s, as measured in a Rheotens apparatus using a capillary die with a diameter of 2 mm and a length of 6 mm and a temperature of 200 °C with an acceleration of the melt strand drawn down of 120 mm/sec$^2$, and said foam having a melting temperature of at least 135°C, preferably at least 140°C, measured according to ISO-11357-3 by DSC analysis as described in the description,

   b. subjecting the foam to a thermal treatment at a temperature Tt between 5 and 15 °C lower than the melting temperature of the HMS-PP and for a duration between 1 and 10 minutes, the melting temperature measured according to ISO-11357-3 by DSC analysis as described in the description.

2. The process according to claim 1, wherein the thermal treatment is done for a duration between 2 and 8 minutes, preferably 3 to 5 minutes.

3. The process according to claim 1 or 2, wherein the melting temperature Tm of the foam is at least 150°C and the temperature Tt is between 120 and 145 °C.

4. The process according to any one of claims 1 to 3, wherein the HMS-PP has a melt strength as **characterised by** the strain hardening factor (SHF), measured as described in the description, of at least 1.7, more preferably of at least 2, even more preferably in the range of 2 to 15, still more preferably in the range of 3.5 to 15.

5. The process according to any one of claims 1 to 4 wherein the foam is formed by extruding a composition comprising HMS-PP, a blowing agent and preferably a foam nucleating agent, then cooling the foamed extrudate to a temperature between 10 and 30°C below the melting temperature Tm of the HMS-PP and subsequently bring the foamed extrudate to the temperature Tt and do the thermal treatment.

6. The process according to any one of claims 1 to 5, wherein the HMS-PP is I) a long-chain branched polypropylenes synthesised with a metallocene catalyst or II) produced by modifying polypropylene homopolymer or polypropylene copolymer having less than 6 wt% of comonomer wherein the modification is done a) by e-beam irradiation or b) by reacting with peroxides in the presence of a polyunsaturated compound followed by thermal treatment to reduce volatiles to a VOC below 75 μgTE/g, as determined according to VDA 278:2011 as described in the description, and a FOG below 150 μgHD/g, as determined according to VDA 278:2011 as described in the description.

7. The process according to any one of claims 1 to 6, wherein the foam is in the form of extruded foam having a foam density of 350 g/liter or lower.

8. The process according to any one of claims 1 to 7 wherein the propylene polymer composition comprises at least 50 wt% relative to the total weight of the propylene polymer composition of a) the HMS-PP and preferably up to 50 wt% of b) one or more polypropylene random copolymers or heterophasic copolymers with ethylene and optionally other C4 - C10 alpha-olefins, or polyethylene.

9. The process according to any one of claims 1 to 8, wherein the polypropylene foam product obtained has a volatile organic compounds (VOC) emission, determined according to VDA278:2011 at 90°C for 0.5 hrs as described in the description of below 300 μgTE/g, preferably below 200, 150 or 100 and most preferably below 50 μgTE/g.

10. The process according to any one of claims 1 to 9, wherein the polypropylene foam product obtained has a FOG emission, determined according to VDA278:2011 at 120°C for 1.0 hrs as described in the description, of below 200 μgHD/g, preferably below 150 and most preferably below 100 μgHD/g.

11. The process according to any one of claims 1 to 10, wherein the polypropylene foam product obtained has a VOC and FOG emission level equal or less than 150%, 120% or more preferably less than 100% of the calculated weight average VOC and FOG emission level of the polypropylene constituents before foaming.

12. The process according to any one of claims 1 to 11, wherein the polypropylene composition further comprises antioxidants and wherein the heat treatment is such that the amount of antioxidant reduces by less than 20 wt%, preferably less than 15 wt%, more preferably less than 10 wt%.

**Patentansprüche**

1. Verfahren zur Herstellung eines Schaums mit geringen Emissionen organischer Verbindungen, das Verfahren umfassend:

   a. Bereitstellen eines Schaums, der eine Propylenzusammensetzung umfasst, die ein Propylen-Homopolymer oder -Copolymer (HMS-PP) mit hoher Schmelzefestigkeit oder Kombinationen davon umfasst, wobei das HMS-PP eine Schmelzefestigkeit von mindestens 25 cN bei einer Höchstgeschwindigkeit von mindestens 200 mm/s aufweist, gemessen in einem Rheotens-Gerät unter Verwendung einer Kapillardüse mit einem Durchmesser von 2 mm und einer Länge von 6 mm und einer Temperatur von 200 °C mit einer Beschleunigung des heruntergezogenen Schmelzstrangs von 120 mm/sec$^2$, und einer Schmelztemperatur von mindestens 135 °C, vorzugsweise mindestens 140 °C, gemessen gemäß ISO-11357-3 durch DSC-Analyse wie in der Beschreibung beschrieben, aufweist,
   b. Unterwerfen des Schaums einer thermischen Behandlung bei einer Temperatur Tt zwischen 5 und 15 °C niedriger als die Schmelztemperatur Tm des HMS-PP und für eine Dauer zwischen 1 und 10 Minuten, wobei die Schmelztemperatur gemäß ISO-11357-3 durch DSC-Analyse wie in der Beschreibung beschrieben gemessen wird.

2. Verfahren nach Anspruch 1, wobei die thermische Behandlung für eine Dauer zwischen 2 und 8 Minuten, vorzugsweise 3 bis 5 Minuten, durchgeführt wird.

3. Verfahren nach Anspruch 1 oder 2, wobei die Schmelztemperatur Tm des Schaums mindestens 150 °C beträgt und die Temperatur Tt zwischen 120 und 145 °C liegt.

4. Verfahren nach einem der Ansprüche 1 bis 3, wobei das HMS-PP eine Schmelzefestigkeit, charakterisiert durch den Kaltverfestigungsfaktor (SHF), gemessen wie in der Beschreibung beschrieben, von mindestens 1,7, stärker bevorzugt mindestens 2, noch stärker bevorzugt im Bereich von 2 bis 15, noch weit mehr bevorzugt im Bereich von 3,5 bis 15, aufweist.

5. Verfahren nach einem der Ansprüche 1 bis 4, wobei der Schaum durch Extrudieren einer Zusammensetzung, die HMS-PP, ein Treibmittel und vorzugsweise einen Schaumkeimbildner umfasst, und anschließendes Abkühlen des geschäumten Extrudats auf eine Temperatur zwischen 10 und 30 °C unter der Schmelztemperatur Tm des HMS-PP gebildet wird und anschließend das geschäumte Extrudat auf die Temperatur Tt gebracht und die thermische Behandlung durchgeführt wird.

6. Verfahren nach einem der Ansprüche 1 bis 5, wobei das HMS-PP I) ein langkettiges, verzweigtes Polypropylen ist, das mit einem Metallocenkatalysator synthetisiert wurde, oder II) durch Modifizieren eines Polypropylenhomopolymers oder Polypropylencopolymers mit weniger als 6 Gew.-% Comonomer hergestellt wird, wobei die Modifizierung a) durch Bestrahlung mit Elektronenstrahlen oder b) durch Reaktion mit Peroxiden in Gegenwart einer mehrfach ungesättigten Verbindung erfolgt, gefolgt von einer thermischen Behandlung, um flüchtige Bestandteile auf einen VOC unter 75 μgTE/g, bestimmt gemäß VDA 278:2011 wie in der Beschreibung beschrieben, und einen FOG unter 150 μgHD/g, bestimmt nach VDA 278:2011 wie in der Beschreibung beschrieben, zu reduzieren.

7. Verfahren nach einem der Ansprüche 1 bis 6, wobei der Schaum in Form von extrudiertem Schaum mit einer Schaumdichte von 350 g/Liter oder weniger vorliegt.

8. Verfahren nach einem der Ansprüche 1 bis 7, wobei die Propylenpolymerzusammensetzung mindestens 50 Gew.-%, bezogen auf das Gesamtgewicht der Propylenpolymerzusammensetzung, a) des HMS-PP und vorzugsweise bis zu 50 Gew.-% b) eines oder mehrere statistische Polypropylenecopolymere oder heterophasische Copolymere mit Ethylen und optional anderen $C_4$-$C_{10}$-alpha-Olefinen oder Polyethylen umfasst.

9. Verfahren nach einem der Ansprüche 1 bis 8, wobei das erhaltene Polypropylenschaumprodukt eine Emission flüchtiger organischer Verbindungen (VOC), bestimmt gemäß VDA278:2011 bei 90 °C für 0,5 Stunden wie in der Beschreibung beschrieben, unter 300 μgTE/g, vorzugsweise unter 200, 150 oder 100 und am meisten bevorzugt unter 50 μgTE/g aufweist.

10. Verfahren nach einem der Ansprüche 1 bis 9, wobei das erhaltene Polypropylenschaumprodukt eine FOG-Emission, bestimmt gemäß VDA278:2011 bei 120 °C für 1,0 Stunden wie in der Beschreibung beschrieben, von unter 200 μgHD/g, vorzugsweise unter 150 und am meisten bevorzugt unter 100 μgHD/g aufweist.

11. Verfahren nach einem der Ansprüche 1 bis 10, wobei das erhaltene Polypropylenschaumprodukt einen VOC- und FOG-Emissionspegel aufweist, der gleich oder weniger als 150 %, 120 % oder stärker bevorzugt weniger als 100 % des berechneten gewichtsdurchschnittlichen VOC- und FOG-Emissionspegels der Polypropylenbestandteile vor dem Aufschäumen beträgt.

12. Verfahren nach einem der Ansprüche 1 bis 11, wobei die Polypropylenzusammensetzung ferner Antioxidantien umfasst und wobei die Wärmebehandlung so erfolgt, dass sich die Menge an Antioxidans um weniger als 20 Gew.-%, vorzugsweise weniger als 15 Gew.-%, noch stärker bevorzugt weniger als 10 Gew.-% verringert.

**Revendications**

1. Procédé de production d'une mousse ayant de faibles émissions de composés organiques, le procédé comprend les étapes suivantes :

   a. la fourniture d'une mousse comprenant une composition de propylène comprenant un homopolymère ou copolymère de propylène à haute résistance à l'état fondu (HMS-PP) ou des combinaisons de ceux-ci, ledit HMS-PP ayant une résistance à l'état fondu d'au moins 25 cN à une vitesse maximale d'au moins 200 mm/s, telle que mesuré dans un appareil Rheotens en utilisant un conduit capillaire d'un diamètre de 2 mm et d'une longueur de 6 mm et une température de 200 °C avec une accélération du fil fondu étiré de 120 mm/sec², et ladite mousse ayant une température de fusion d'au moins 135 °C, de préférence d'au moins 140 °C, mesurée conformément à ISO-11357-3 par analyse DSC comme décrit dans la description,

b. la soumission de la mousse à un traitement thermique à une température Tt inférieure de 5 à 15 °C à la température de fusion du HMS-PP et pendant une durée entre 1 et 10 minutes, la température de fusion étant mesurée conformément à ISO-11357-3 par analyse DSC comme décrit dans la description.

2. Procédé selon la revendication 1, dans lequel le traitement thermique est effectué pendant une durée entre 2 et 8 minutes, de préférence de 3 à 5 minutes.

3. Procédé selon la revendication 1 ou 2, dans lequel la température de fusion Tm de la mousse est d'au moins 150 °C et la température Tt est entre 120 et 145 °C.

4. Procédé selon l'une quelconque des revendications 1 à 3, dans lequel le HMS-PP présente une résistance à l'état fondu telle que **caractérisée par** le facteur d'écrouissage (SHF), mesuré comme décrit dans la description, d'au moins 1,7, de manière davantage préférée d'au moins 2, de manière encore plus préférée dans la plage de 2 à 15, ou mieux encore dans la plage de 3,5 à 15.

5. Procédé selon l'une quelconque des revendications 1 à 4, dans lequel la mousse est formée en extrudant une composition comprenant un HMS-PP, un agent d'expansion et de préférence un agent de nucléation de mousse, puis en refroidissant l'extrudat expansé jusqu'à une température inférieure de 10 à 30 °C à la température de fusion Tm du HMS-PP et ensuite amener l'extrudat expansé à la température Tt et effectuer le traitement thermique.

6. Procédé selon l'une quelconque des revendications 1 à 5, dans lequel le HMS-PP est I) un polypropylène ramifié à longue chaîne synthétisé avec un catalyseur à métallocène ou II) produit en modifiant un homopolymère de polypropylène ou un copolymère de polypropylène ayant moins de 6 % en poids de comonomère dans lequel la modification est effectuée a) par irradiation par faisceau d'électrons ou b) par réaction avec des peroxydes en présence d'un composé polyinsaturé suivie d'un traitement thermique pour réduire les substances volatiles jusqu'à un COV inférieur à 75 μgTE/g, tel que déterminé conformément au VDA 278:2011 comme décrit dans la description, et un FOG inférieur à 150 μgHD/g, tel que déterminé conformément au VDA 278:2011 comme décrit dans la description.

7. Procédé selon l'une quelconque des revendications 1 à 6, dans lequel la mousse est sous la forme d'une mousse extrudée ayant une densité de mousse de 350 g/litre ou moins.

8. Procédé selon l'une quelconque des revendications 1 à 7, dans lequel la composition de polymère de propylène comprend au moins 50 % en poids par rapport au poids total de la composition de polymère de propylène a) du HMS-PP et de préférence jusqu'à 50 % en poids b) d'un ou de plusieurs copolymères statistiques de polypropylène ou copolymères hétérophasiques avec de l'éthylène et optionnellement d'autres alpha-oléfines en C4 à C10, ou un polyéthylène.

9. Procédé selon l'une quelconque des revendications 1 à 8, dans lequel le produit en mousse de polypropylène obtenu présente une émission de composés organiques volatils (CCV), déterminée conformément au VDA278:2011 à 90 °C pendant 0,5 h comme décrit dans la description en dessous de 300 μgTE/g, de préférence en dessous de 200, 150 ou 100 et de manière préférée entre toutes en dessous de 50 μgTE/g.

10. Procédé selon l'une quelconque des revendications 1 à 9, dans lequel le produit en mousse de polypropylène obtenu présente une émission de FOG, déterminée conformément au VDA278:2011 à 120 °C pendant 1,0 h comme décrit dans la description, en dessous de 200 μgHD/g, de préférence en dessous de 150 et de manière préférée entre toutes en dessous de 100 μgHD/g.

11. Procédé selon l'une quelconque des revendications 1 à 10, dans lequel le produit en mousse de polypropylène obtenu présente un niveau d'émission de COV et de FOG inférieur ou égal à 150 %, 120 % ou de manière davantage préférée inférieur à 100 % du niveau moyen d'émission en poids calculé de COV et de FOG des constituants du polypropylène avant expansion.

12. Procédé selon l'une quelconque des revendications 1 à 11, dans lequel la composition de polypropylène comprend en outre des antioxydants et dans lequel le traitement thermique est tel que la quantité d'antioxydant diminue de moins de 20 % en poids, de préférence de moins de 15 % en poids, de manière davantage préférée de moins de 10 % en poids.

Figure 1

Figure 2

Figure 3

Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4424287 A
- US 6245823 B1
- US 7166248 B2
- US 6521675 B1
- CN 103497280 A
- EP 2000504 A1
- US 8722805 B2
- EP 1892264 A1
- EP 0879830 A1
- EP 1354901 A1
- WO 2016066446 A1
- EP 3015504 A1
- US 6417242 B1

**Non-patent literature cited in the description**

- Rheotens-Mastercurves and Drawability of Polymer Melts. **M. H. WAGNER.** Polymer Engineering and Sience. MID-APRIL ISW, vol. 36, 925-935
- **BAUMGÄRTEL M ; WINTER HH.** Determination of the discrete relaxation and retardation time spectra from dynamic mechanical data. *Rheol Acta,* 1989, vol. 28, 511519